**Europäisches Patentamt**

(19) **European Patent Office**

**Office européen des brevets**

(11) Numéro de publication: **0 176 386**
**B1**

(12) **FASCICULE DE BREVET EUROPEEN**

(45) Date de publication du fascicule du brevet:
**20.04.88**

(21) Numéro de dépôt: **85401619.3**

(22) Date de dépôt: **08.08.85**

(51) Int. Cl.⁴: **F 04 D 29/02**, B 29 C 67/14,
B 23 P 15/00, B 29 B 11/04,
F 01 D 5/28

(54) **Procédé de fabrication d'une roue de turbine ou de compresseur en matériau composite, et roue ainsi obtenue.**

(30) Priorité: **13.08.84 FR 8412740**

(43) Date de publication de la demande:
**02.04.86 Bulletin 86/14**

(45) Mention de la délivrance du brevet:
**20.04.88 Bulletin 88/16**

(84) Etats contractants désignés:
**DE GB IT SE**

(56) Documents cités:
**FR - A - 646 341**
**FR - A - 2 476 766**
**GB - A - 1 276 356**
**US - A - 3 219 503**
**US - A - 3 993 817**
**US - A - 4 000 665**
**US - A - 4 190 626**

(73) Titulaire: **SOCIETE EUROPEENNE DE PROPULSION**
**Société Anonyme dite:, 3, Avenue du Général de Gaulle,**
**F-92800 Puteaux (FR)**

(72) Inventeur: **Broquere, Bernard, 15, rue Jules Verne,**
**F-33100 Bordeaux (FR)**
Inventeur: **Etienne, Jacques, Chemin de Mathiadeux,**
**F-33000 Le Taillan Medoc (FR)**

(74) Mandataire: **Joly, Jean-Jacques et al, CABINET BEAU**
**DE LOMENIE 55, rue d'Amsterdam, F-75008 Paris (FR)**

**Description**

La présente invention est relative à une roue de turbine ou de compresseur en matériau composite. Une telle roue a été proposée dans le document FR-A-2 476 766.

L'utilisation de matériaux composites pour la fabrication de pièces de turbomachines nécessite la mise en oeuvre de renforts de hautes caractéristiques mécaniques. La nature des fibres constitutives du renfort est choisie en fonction des conditions chimiques et thermiques de l'environnement dans lequel les pièces doivent être utilisées. L'orientation et la répartition des fibres sont quant à elles déterminées en fonction des sollicitations thermomécaniques.

L'invention a pour but de fournir un procédé permettant l'obtention, à un coût avantageux, de structures de renfort fibreux particulièrement adaptées à la réalisation de roues de turbines ou de compresseurs.

Ce but est atteint au moyen d'un procédé comportant, conformément à l'invention, les étapes qui consistent à:

— réaliser au moins deux textures hélicoïdales formées chacune par tissage d'une bande en spirale avec des fils de chaîne hélicoïdaux et des fils de trame sensiblement perpendiculaires à l'axe de la texture,

— assembler les textures hélicoïdales en les «vissant» l'une dans l'autre et les empiler par rapprochement mutuel de leurs spires entrelacées, et

— densifier l'empilement ainsi réalisé pour obtenir une préforme de roue de turbine ou de compresseur.

Les textures à tissage enspirale sont particulièrement bien ataptées à la réalisation de pièces utilisées en rotation dans lesquelles les sollicitations mécaniques engendrent des contraintes essentiellement en traction circonférentielle et en traction radiale.

Par ailleurs, l'empilage de plusieurs textures permet, par un choix approprié des dimensions de ces textures, de réaliser des préformes de roue d'épaisseur variable depuis le petit diamètre, au voisinage du moyeu, jusqu'à la périphérie. Par exemple, l'empilement de plusieurs textures de même petit diamètre mais de grands diamètres différents permet la réalisation de préformes d'épaisseur décroissante depuis le voisinage du moyeu jusqu'à la périphérie. De telles préformes sont donc particulièrement adaptées à la réalisation de roues de turbines ou de compresseurs. La fabrication finale par usinage de la préforme s'en trouve facilitée et, surtout, une économie de matière très importante est réalisée en comparaison avec l'utilisation de préformes cylindriques d'épaisseur constante.

La présente invention a aussi pour objet une roue de turbine ou de compresseur telle qu'elle peut être obtenue au moyen du procédé défini plus haut.

La roue de turbine ou de compresseur en matériau composite est, conformément à l'invention, caractérisée en ce qu'elle comporte une structure de renfort formée par l'empilement de plusieurs textures hélicoïdales «vissées» l'une dans l'autre, chaque texture étant formée par une bande tissée en spirale avec des fils de chaîne hélicoïdaux et des fils de trame sensiblement perpendiculaires à l'axe de la texture.

D'autres particularités et avantages du procédé et de la roue de turbine ou de compresseur conformes à l'invention ressortiront à la lecture de la description faite ci-après, à titre indicatif mais non limitatif, en référence aux dessins annexés sur lesquels:

la figure 1 est une vue en perspective montrant deux textures hélicoïdales destinées à la fabrication d'une roue de turbine conformément à l'invention,

la figure 2 est une vue en perspective illustrant l'assemblage des textures de la figure 1,

la figure 3 est une vue schématique en coupe montrant les textures de la figure 1 assemblées et empilées dans un outillage en vue de la densification, et

la figure 4 est une vue schématique en coupe montrant la préforme obtenue après densification dans l'outillage de la figure 3.

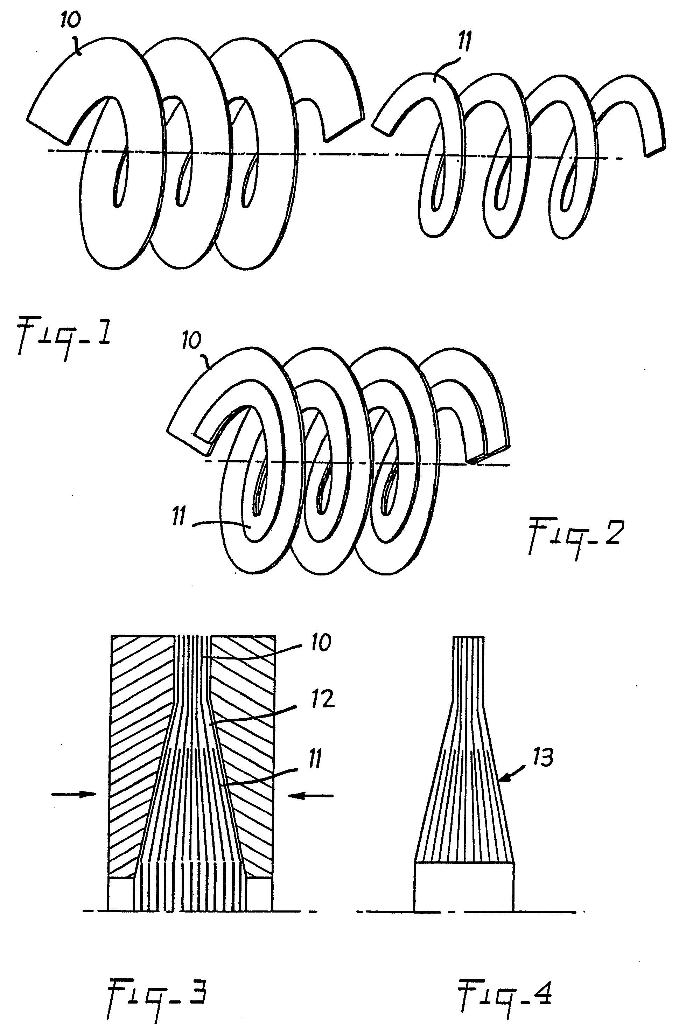

Les deux textures 10 et 11 de la figure 1 sont constituées par des bandes de renfort fibreux, chaque bande ayant une surface engendrée par un segment dont les sommets décrivent deux hélices coaxiales de même pas et qui s'étend en direction sensiblement perpendiculaire à l'axe de ces hélices.

Les textures hélicoïdales 10 et 11 sont réalisées par tissage en spirale avec des fils de chaîne hélicoïdaux et des fils de trame perpendiculaires à l'axe de la texture. Ce mode de tissage est connu longtemps. On pourra par exemple se référer au brevet français No 646 341 du 24 décembre 1927.

Les fils utilisés sont par exemple des fils formés de fibres de carbone, de carbure de silicium, d'alumine, de «Kevlar», ou des fils à base d'autres fibres à hautes caractéristiques mécaniques et/ou thermiques. Le tissage peut être du type toile, satin ou autre.

Les textures 10 et 11 présentent un même diamètre intérieur d, mais des diamètres extérieurs D1 et D2 différents, la bande formant la texture 10 étant plus large que celle formant la texture 11.

Les deux textures 10 et 11 sont assemblées avec le même pas par «vissage» de l'une des textures dans l'autre. Ainsi, chaque spire d'une texture vient s'intercaler entre deux spires de l'autre texture (figure 2).

Après assemblage, les textures sont empilées. La texture 11 ayant un diamètre extérieur plus petit que celui de la texture 10, on peut ainsi obtenir une surépaisseur dans la partie adjacente au plus petit diamètre, c'est-à-dire dans la partie destinée à former le moyeu de la roue.

En vue de la densification de la structure de renfort, celle-ci est placée dans un outillage maintenant les textures 10 et 11 empilées. Comme le montre la figure 3, cet outillage est constituée essentiellement par un moule dont la cavité annulaire 12 présente, en section droite, une première partie dont la largeur décroît depuis le petit diamètre en direction de la périphérie et une deuxième partie de largeur constante qui se raccorde à la première partie et s'étend radialement jusqu'au grand diamètre.

La densification consiste, comme connu en soi, à infiltrer une matrice au sein de la porosité de la structure de renfort. La matrice est par exemple en matériau réfractaire tel que le carbone ou le carbure de silicium. L'infiltration est réalisée par exemple par densification en phase vapeur ou par imprégnation liquide suivie d'un traitement thermique.

Après densification, la préforme (13) obtenue (figure 4) est usinée pour aboutir à la roue désirée; ainsi, les aubes de la roue sont réalisées par usinage de la partie périphérique de la préforme. L'utilisation de plusieurs textures hélicoïdales de dimensions différentes permet l'obtention d'une préforme se rapprochant de la forme de la pièce définitive, donc une très substantielle économie de matériau.

Dans certains cas, il est avantageux de tisser au moins l'une des textures hélicoïdales avec un grammage variable entre le petit diamètre et le grand diamètre. Par exemple, en augmentant la densité de fils de chaîne hélicoïdaux du côté du petit diamètre, l'on obtient une préforme avec un taux de renfort circonférentiel plus élevé au voisinage du moyeu qu'au voisinage de la périphérie.

En particulier, le nombre de textures hélicoïdales utilisées pourra être supérieur à deux.

**Revendications**

1. Procédé de fabrication d'une préforme d'une roue de turbine ou de compresseur en matériau composite, caractérisé en ce qu'il comporte les étapes qui consistent à:
— réaliser au moins deux textures hélicoïdales formées chacune par tissage d'une bande en spirale avec des fils de chaîne hélicoïdaux et des fils de trame sensiblement perpendiculaires à l'axe de la texture,
— assembler les textures hélicoïdales en les «vissant» l'une dans l'autre et les empiler par rapprochement mutuel de leurs spires entrelacées, et
— densifier l'empilement ainsi réalisé pour obtenir la préforme de roue de turbine ou de compresseur.

2. Procédé selon la revendication 1, caractérisé en ce que l'on assemble des textures hélicoïdales formées par des bandes de largeurs différentes.

3. Procédé selon l'une quelconque des revendications 1 et 2, caractérisé en ce que l'on tisse au moins l'une des textures avec un grammage variable de manière à obtenir un taux de renfort variable au sein de la préforme.

4. Roue de turbine ou de compresseur en matériau composite, caractérisée en ce qu'ellel comporte une structure de renfort formée par l'empilement de plusieurs textures hélicoïdales (10, 11) «vissés» l'une dans l'autre, chaque texture étant formée par une bande tissée en spirale avec des fils de chaîne hélicoïdaux et des fils de trame sensiblement perpendiculaires à l'axe de la texture.

**Patentansprüche**

1. Verfahren zur Herstellung eines Vorformlings eines Turbinen- oder Kompressorrades aus Verbundmaterial, gekennzeichnet durch die folgenden Verfahrensschritte:
— Erstellung mindestens zweier schraubenförmiger Texturen, die jeweils durch Weben eines spiralförmigen Bandes mit schraubenförmigen Kettfäden und im wesentlichen senkrecht zur Achse der Textur verlaufenden Schussfäden hergestellt sind,
— Zusammenfügen der schraubenförmigen Texturen durch ein ineinander «Verschrauben» und Stapeln der Texturen durch jeweilige Annäherung ihrer ineinander verschlungenen Windungen, und
— Verdichten des so erstellten Stapels um die Vorform des Turbinen- oder Kompressorrades zu erhalten,

2. Verfahren nach Anspruch 1, dadurch gekennzeichnet, dass schraubenförmige Texturen zusammengefügt werden, die aus Bändern verschiedener Breite bestehen.

3. Verfahren nach einem der Ansprüche 1 und 2, dadurch gekennzeichnet, dass mindestens eine der Texturen mit einer variablen Flächenmasse gewebt wird, derart, dass im Inneren der Vorform ein variabler Verstärkungsgrad erzielt wird.

4. Turbinen- oder Kompressorrad aus Verbundmaterial, dadurch gekennzeichnet, dass es eine Verstärkungsstruktur aufweist, die durch Stapelung mehrerer schraubenförmiger Texturen (10, 11) gebildet wird, die ineinander verschraubt sind, wobei jede Textur aus einem spiralförmig gewebten Band besteht, mit schraubenförmigen Kettfäden und Schussfäden, die im wesentlichen senkrecht zur Achse der Textur verlaufen.

**Claims**

1. Process for manufacturing a preform of a turbine or compressor wheel made of composite material, characterized in that it comprises the following steps of:
— making at least two helicoidal textures each formed by weaving a spiral band with helicoidal warp yarns and weft yarns which are substantially perpendicular to the axis of the texture,
— assembling the helicoidal textures by «screwing» them in each other and stacking them by mutually approching their interlaced turns, and
— densifying the stack thus made to obtain the preform of a turbine or compressor wheel.

2. Process according to claim 1, characterized in that helicoidal textures formed by bands of different widths are assembled.

3. Process according to any one of claims 1 or 2, characterized in that at least one of the textures is woven with a variable weight per square meter so as to obtain a variable reinforcement rate within the preform.

4. A turbine or compressor wheel made of composite material, characterized in that it comprises a reinforcing structure formed by the stacking of a plurality of helicoidal textures (10, 11) «screwed» one in the other, each texture being formed by a spirally woven band with helicoidal warp yarns and weft yarns substantially perpendicular to the axis of the texture.

Fig-1

Fig-2

Fig-3

Fig-4